(19) Europäisches Patentamt
European Patent Office
Office européen des brevets

(11) Veröffentlichungsnummer: **0 271 816 B1**

(12) **EUROPÄISCHE PATENTSCHRIFT**

(45) Veröffentlichungstag der Patentschrift: **11.03.92**

(51) Int. Cl.[5]: **C08K 5/17**, C08L 67/06, C08L 63/10

(21) Anmeldenummer: **87118200.2**

(22) Anmeldetag: **09.12.87**

# (54) Härtbare Polyesterformmassen.

(30) Priorität: **17.12.86 DE 3643007**

(43) Veröffentlichungstag der Anmeldung: **22.06.88 Patentblatt 88/25**

(45) Bekanntmachung des Hinweises auf die Patenterteilung: **11.03.92 Patentblatt 92/11**

(84) Benannte Vertragsstaaten: **DE ES FR GB IT NL SE**

(56) Entgegenhaltungen:
**EP-A- 0 152 028**
**DE-A- 2 326 103**
**GB-A- 2 147 593**
**US-A- 4 267 279**

(73) Patentinhaber: **BASF Aktiengesellschaft**
**Carl-Bosch-Strasse 38**
**W-6700 Ludwigshafen(DE)**

(72) Erfinder: **Hesse, Anton, Dr.**
**Peter-Nickel-Strasse 15**
**W-6940 Weinheim(DE)**
Erfinder: **Trautmann, Walter, Dr.**
**Ritterbueschel 87**
**W-6730 Neustadt(DE)**
Erfinder: **Henkes, Erhard, Dr.**
**Dr.-Kurt-Schumacher-Strasse 1**
**W-6141 Einhausen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 271 816 B1

## Beschreibung

Die Erfindung betrifft Polyesterformmassen, die Verstärkungsfasern und Füllstoffe sowie ein Mittel zur Erniedrigung der Viskosität enthalten.

Flächiges oder teigförmiges Halbzeug aus Verstärkungsfasern und Füllstoffe enthaltenden ungesättigten Polyesterharzen werden als "sheet molding compound" (SMC) oder "bulk molding compound" (BMC) bezeichnet. Diese Massen werden im Warmpreß- oder Spritzgußverfahren zu gehärteten Formstoffen verarbeitet, beispielsweise zu Automobilteilen oder Elektroartikeln. Ihre Herstellung und Verarbeitung ist ausführlich beschrieben in der Monographie von P.F. Bruins, "Unsaturated Polyester Technology", Gordon and Breach Science Publishers 1976, Seiten 211 bis 238.

Um die Steifigkeit der Formstoffe zu erhöhen und ihre Oberflächenqualität zu verbessern, ist es häufig notwendig, den Formmassen verhältnismäßig große Füllstoffmengen zuzusetzen. Als Folge davon steigt die Viskosität der Harz/Füllstoffgemische so stark an, daß damit eine ausreichende Tränkung der Verstärkungsfasern nicht mehr möglich ist, die Entlüftung behindert und die Topfzeit verkürzt wird.

Der Erfindung lag also die Aufgabe zugrunde, die Viskosität von Harz/Füllstoff-Gemischen mit hohem Füllgrad durch geeignete Zusätze so zu vermindern, daß eine einwandfreie Tränkung der Verstärkungsfasern gewährleistet ist.

Um dies zu erreichen, wurde vorgeschlagen, Silane, Orthotitanate oder Triglykol-Diborate zuzusetzen, die aber keine ausreichende Erniedrigung der Viskosität bewirken bzw. andere Nachteile mit sich bringen.

Es wurde nun gefunden, daß die oben genannte Aufgabe durch den Zusatz bestimmter Aminosäuren gelöst wird.

Gegenstand der Erfindung sind demzufolge härtbare ungesättigte Polyesterformmassen, enthaltend ein Gemisch aus

A. einem ethylenisch ungesättigten Polyester oder einem endständig ungesättigten Vinylester,
B. ethylenisch ungesättigten, mit A copolymerisierbaren Monomeren,
C. 5 bis 200 Gew.-%, bezogen auf A + B, faserförmiger Verstärkungsmittel,
D. 50 bis 350 Gew.-%, bezogen auf A + B, pulverförmiger Füllstoffe,
E. 0,1 bis 4 Gew.-%, bezogen auf A + B, organischer Radikalinitiatoren
F. als Viskositätserniedriger 0,1 bis 6 Gew.-% einer Aminosäure der allgemeinen Formel

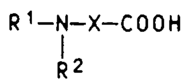

(I)

wobei die Symbole folgende Bedeutung haben:

$R^1$ = Wasserstoff oder $C_1$-$C_4$-Alkylrest,
$R^2$ = langkettiger aliphatischer Alkyl- oder Acylrest mit 6 bis 30 Kohlenstoffatomen, der gesättigt oder ungesättigt, geradkettig oder verzweigt sein kann,
X = Alkylenreste mit 1 bis 6 Kohlenstoffatomen, der geradkettig oder verzweigt sein kann, sowie gegebenenfalls

G. üblichen Eindickmitteln, schrumpfmindernden oder elastifizierenden organischen Polymeren, Gleitmitteln, Inhibitoren, Pigmenten und Härtungsbeschleunigern.

Die anspruchsgemäßen Polyesterformmassen enthalten folgende Bestandteile:

A. Als ethylenisch ungesättigte Polyester eignen sich die üblichen Polykondensationsprodukte aus mehrwertigen, insbesondere zweiwertigen Carbonsäuren und deren veresterbaren Derivaten, insbesondere Anhydriden, die mit mehrwertigen, insbesondere zweiwertigen Alkoholen esterartig verknüpft sind, und gegebenenfalls zusätzlich Reste einwertiger Carbonsäuren und/oder Reste einwertiger Alkohloe und/oder Reste von Hydroxycarbonsäuren enthalten, wobei zumindest ein Teil der Reste über ethylenisch ungesättigte copolymerisierbare Gruppen verfügen muß.

Als mehrwertige, insbesondere zweiwertige, gegebenenfalls ungesättigte Alkohole eigenen sich die üblichen, insbesondere acyclischen Gruppen, cyclische Gruppen als auch beide Arten von Gruppen aufweisenden Alkandiole und Oxalkandiole, wie z.B. Ethylenglykol, Propylenglykol-1,2, Propandiol-1,3, Butylenglykol-1,3, Butandiol-1,4, Hexandiol-1,6, 2,2-Dimethylpropandiol-1,3, Diethylenglykol, Triethylenglykol, Polyethylenglykol, Dipropylenglykol, Cyclohexandiol-1,2, 2,2-Bis-(hydroxy-cyclohexyl)-propan, Trimethylolpropanmonoallylether oder Butendiol-1,4. Ferner können ein-, drei- oder höherwertige Alkohole, wie z.B. Ethylhexanol, Benzylalkohole, 1,2-Di-(allyloxy)-propanol-(3), Glycerin, Pentaerythrit oder Trimethylolpropan

in untergeordneten Mengen mitverwendet werden.

Die mehrwertigen, insbesondere zweiwertigen Alkohole werden im allgemeinen in stöchiometrischen oder annähernd stöchiometrischen Mengen mit mehrbasischen Carbonsäuren bzw. deren kondensierbaren Derivaten umgesetzt.

Geeignete Carbonsäuren bzw. deren Derivate sind zweibasische olefinisch ungesättigte, vorzugsweise $\alpha,\beta$-olefinisch ungesättigte Carbonsäuren, wie z.B. Maleinsäure, Fumarsäure, Chlormaleinsäure, Itaconsäure, Methylenglutarsäure und Mesaconsäure bzw. deren Ester oder vorzugsweise deren Anhydride. In die Polyester können weiterhin zusätzlich andere modifizierend wirkenden zweibasische, ungesättigte und/oder gesättigte, sowie aromatische Carbonsäuren, wie z.B. Bernsteinsäure, Glutarsäure, Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Tetrachlorphthalsäure, 3,6-Endomethylen-1,2,3,6-tetrahydrophthalsäure, oder Hexachlorendomethylentetrahydrophthalsäure einkondensiert sein, ferner ein-, drei- und höherbasische Carbonsäuren, wie z.B. Ethylhexansäure, Fettsäuren, Methacrylsäure, Acrylsäure, Fettsäuren, 1,2,4,5-Benzoltetracarbonsäure, Trimellitsäure.

Vorzugsweise verwendet werden Maleinsäure bzw. deren Anhydrid und Fumarsäure.

Auch ungesättigte Polyester, die unter Verwendung von Dicyclopentadien hergestellt wurden, lassen sich vorteilhaft einsetzen.

Gemischte ungesättigte Polyester, darunter auch solche, die in den Vinylmonomeren B nur beschränkt löslich sind und leicht kristallisieren, können ebenfalls eingesetzt werden. Solche leicht kristallisierende ungesättigte Polyester können z.B. aus Fumarsäure, Adipinsäure, Terephthalsäure, Ethylenglykol, Butandiol-1,4, Hexandiol-1,6 und Neopentylglykol aufgebaut sein.

Die ungesättigten Polyester besitzen Säurezahlen von 5 bis 200, vorzugsweise von 20 bis 85 und mittlere Molekulargewichte von ungefähr 800 bis 6000, vorzugsweise von etwa 1000 bis 4000.

Die amorphen und gegebenenfalls kristallisierbaren ungesättigten Polyester werden im allgemeinen durch Schmelzkondensation oder Kondensation unter azeotropen Bedingungen aus ihren Ausgangskomponenten nach kontinuierlichen oder diskontinuierlichen Verfahren hergestellt.

Geeignete endständig ungesättigte Vinylesterharze im Sinne der Erfindung besitzen die charakteristische Gruppierung $-CO-OCH_2CHOH-CH_2O-$ und enthalten endständige polymerisierbare ungesättigte Gruppen. Die Vinylesterharze werden hergestellt durch Umsetzung von etwa stöchiometrischen Mengen eines Polyepoxidharzes und einer ungesättigten Monocarbonsäure, beispielsweise Methacrylsäure.

Vinylesterharze der genannten Art werden z.B. beschrieben in der US-PS 3 367 992, wonach Dicarbonsäure-Halbester von Hydroxyacrylaten oder -methacrylaten mit Polyepoxidharzen umgesetzt werden. Gemäß US-PS 3 066 112 und 3 179 623 werden Vinylesterharze aus Monocarbonsäuren, z.B. Acryl- und Methacrylsäure, erhalten; hier wird auch eine alternative Herstellungsmethode genannt, wonach ein Glycidylmethacrylat oder -acrylat mit dem Natriumsalz eines zweiwertigen Phenols, z.B. Bisphenol A, zur Reaktion gebracht wird. Vinylesterharze auf Basis von Epoxi-Novolak-Harzen sind in der US-PS 3 301 743 beschrieben. In der US-PS 3 256 226 werden Vinylesterharze offenbart, bei denen das Molekluargewicht des Polyepoxids vor der Reaktion mit der Acrylsäure durch Umsetzung von 2 Mol Polyepoxid mit 1 Mol einer Dicarbonsäure gesteigert wird. In Betracht kommen ferner modifizierte Vinylesterharze, beispielsweise solche gemäß DE-OS 25 34 034 (äquivalent zu US-PS 3 947 422) die Halbestergruppen enthalten und durch Reaktion der zweiten Hydroxylgruppe der Gruppierung $-CO-OCH_2.CHOH-CH_2O-$ mit einem Dicarbonsäureanhydrid, z.B. dem Anhydrid der Maleinsäure, Citraconsäure, Phthalsäure, Tetrabromphthalsäure u.a. erhalten werden.

Die erfindungsgemäßen härtbaren Polyesterformmassen enthalten im allgemeinen 20 bis 90, vorzugsweise 30 bis 80 Gew.-% an Komponente A, bezogen auf das Gesamtgewicht der Komponenten A + B.

B. Als copolymerisierbare, ethylenisch ungesättigte monomere Verbindungen kommen die üblicherweise zum Herstellen ungesättigter Polyesterformmassen verwendeten Allyl- und vorzugsweise Vinylverbindung in Frage, Vinylaromaten, wie Styrol, substituierte Styrole, wie p-Chlorstyrol oder Vinyltoluol, Ester der Acrylsäure und Methacrylsäure mit 1 bis 18 Kohlenstoffatomen enthaltenden Alkoholen, wie Methacrylsäurebutylester, Ethylhexylacrylat, Hydroxypropylacrylat, $\beta$-Hydroxyethylmethacrylat, Dihydrodicylopentadienylacrylat, Butandioldiacrylat und (Meth)-acrylsäureamide, Allylester, wie Diallylphthalat, und Vinylester wie Ethylhexansäurevinylester, Vinylacetat, Vinylpropionat, Vinylpivalat und andere. Desgleichen eignen sich Gemische der genannten olefinisch ungesättigten Monomeren. Bevorzugt geeignet als Komponente B sind Styrol, p-Methylstyrol, Chlorstyrol, Vinyltoluol, Divinylbenzol und Diallylphthalat. Die Komponente B ist in den Poloyesterformmassen im allgemeinen in einer Menge von 5 bis zu 80, vorzugsweise von 10 bis 70 Gew.-%, bezogen auf das Gesamtgewicht der Komponenten A + B enthalten.

C. Als Verstärkungsfasern kommen in Frage anorganische oder organische Fasern als Rovings oder flächige, gegebenenfalls daraus gewebte Gebilde, wie Matten, z.B. aus Glas, Kohlenstoff, Asbest, Cellulose

und synthetischen organischen Fasern, wie Polycarbonsäureester, Polycarbonate und Polyamide. Die Komponente C ist in den Formmassen in Mengen von 5 bis 200, vorzugsweise von 20 bis 150 Gew.-%, bezogen auf A + B, enthalten.

D. Geeignete Füllstoffe sind z.B. übliche feinpulvrige oder körnige Füllstoffe, wie Kreide, Kaolin, Quarzmehl, Dolomit, Schwerspat, Metallpulver, Aluminiumoxidhydrat, Zement, Talkum, Kieselgur, sowie Holzmehl und Holzspäne. Die Füllstoffe werden in Mengen von 50 bis 350, vorzugsweise 100 bis 250 Gew.-%, bezogen auf die Komponenten A + B, verwendet.

E. Als Polymerisationsinitiatoren werden übliche, in der Wärme Radikale bildende organische Peroxide in Mengen von 0,1 bis 4 Gew.-%, bezogen auf A + B, eingesetzt. Geeignete Initiatoren sind z.B.: Benzoylperoxid, tert.-Butylperoctat, tert.-Butylperbenzoat, Dicumylperoxid, Di-tert.-butylperoxid und Perketale, wie z.B. Trimethylcyclohexanonperketal, sowie Percarbonate. Hydroperoxide sind nicht geeignet. Vorzugsweise sollen die Peroxide eine Halbwertzeit bei 80 °C von mehr als 5 h, insbesondere von mehr als 50 h haben. Reaktive Peroxide, z.B. tert.-Butylperoctoat können zusätzlich in untergeordneten Mengen anwesend sein. Auch CC-labile Verbindungen sowie Azoverbindungen sind geeignet.

F. Als Viskositätserniedriger werden erfindungsgemäß die Aminosäuren der allgemeinen Formel I eingesetzt.

Beispiele geeigneter Aminosäuren sind:

3-Octylaminopropionsäure
3-(2-Ethylhexyl)-aminopropionsäure
3-Laurylaminopropionsäure
3-Palmitylaminopropionsäure
3-Stearylaminopropionsäure
3-Oleoylaminopropionsäure.

Diese Aminosäuren können hergestellt werden durch Addition entsprechender Fettamine an Acrylsäure oder an Acrylester mit nachfolgender Verseifung. Entsprechend kann auch eine Addition von Fettaminen an Methacrylsäure oder Crotonsäure bzw. deren Ester vorgenommen werden.

Weitere Beispiele geeigneter Aminosäuren sind:

Octylaminoessigsäure
N-Methyl-octylaminoessigsäure
N-(2-Ethylhexyl)-aminoessigsäure
Lauryl-aminoessigsäure
Palmityl-aminoessigsäure
Stearyl-aminoessigsäure
N-Methylstearyl-aminoessigsäure
Oleoyl-aminoessigsäure
N-Methyloleoyl-aminoessigsäure.

Diese Verbindungen können hergestellt werden durch Umsetzung von Fettaminen mit Chloressigsäure.

Weitere Beispiele sind:

Octanoylglycin
Octanoylalanin
Octanoylsarkosin
Octanoyl-6-aminocapronsäure
Isononanoyl-glycin, -alanin, -sarkosin und 6-aminocapronsäure
Lauroyl-glycin, -alanin, -sarkosin und 6-aminocapronsäure
Palmitoyl-glycin, -alanin, -sarkosin und 6-aminocapronsäure
Stearoyl-glycin, -alanin, -sarkosin und 6-aminocapronsäure
Oleoyl-glycin, -alanin, -sarkosin und 6-aminocapronsäure.

Die Synthese dieser Verbindungen erfolgt aus den entsprechenden Fettsäurechloriden und Aminosäuren. Bei den Fettsäurechloriden können auch Gemische eingesetzt werden, z.B. solche, die bei der Säurechloridherstellung aus technischen Fettsäuren anfallen.

Die Viskositätserniedriger werden in Mengen von 0,1 bis 6, vorzugsweise 0,2 bis 4 Gew.-%, bezogen auf A + B, eingesetzt.

G. Als weitere übliche Zusatzstoffe kommen in Frage:

Schrumpfmindernde Polymerisate, wie z.B. Polystyrol, Polymethylmethacrylat, Polyvinylacetat, Polyethylen, Polybutadien, Polyisopren, Celluloseester, Polyvinylchlorid und entsprechende Copolymere und Pfropfcopolymere, wie z.B. schlagzähes Polystyrol. Sie werden vorzugsweise als 30 bis 40 gew.-%ige Lösungen in den Monomeren B eingesetzt. Es eignen sich auch Kondensationspolymere, wie gesättigte Polyester oder Polyesterurethane, die in der Komponente B löslich sind und bei der Warmhärtung eine disperse Phase

bilden. Die schrumpfmindernden Zusätze werden in Mengen von 0 bis 30 Gew.-%, vorzugsweise 3 bis 20 Gew.-%, bezogen auf A + B, eingesetzt. Als elastifizierende Zusätze, die zusätzlich auch schrumpfmindernd wirken, eignen sich kautschukartige Blockcopolymere, insbesondere solche aus 40 bis 95 Gew.-% eines Diolefins, z.B. Butadien, Isopren oder Chloropren, und 60 bis 5 Gew.-% eines Vinylaromaten, z.B. Styrol oder p-Methylstyrol. Diese Zusätze können auch Carboxylgruppen tragen.

Geeignete Eindickmittel sind beispielsweise Erdalkalioxide oder -hydroxide, wie Calciumoxid, Calciumhydroxid, Magnesiumhydroxid und vorzugsweise Magnesiumoxid, sowie Gemische dieser Oxide bzw. Hydroxide. Diese können auch ganz oder teilweise durch Zinkoxid ersetzt sein. Auch Polyisocyanate können verwendet werden. Die Verdickungsmittel werden den Formmassen in Mengen von 0,2 bis 5, vorzugsweise von 0,5 bis 3 Gew.-%, bezogen auf A + B zugesetzt.

Geeignete Gleit- und Trennmittel sind Zink-, Magnesium- und Calciumstearat, sowie Polyalkylenetherwachse und Ammoniumsalze aus aliphatischen Carbonbsäuren und aliphatischen Aminen.

Weitere Zusatzstoffe sind z.B. Inhibitoren, wie Hydrochinon, 2,6-Dimethylhydrochinon, tert.-Butylbrenzkatechin, p-Benzochinon, Chloranil, 2,6-Dimethylchinon, Nitrobenzole, wie m-Dinitrobenzol, Thiodiphenylamin oder Salze von N-Nitroso-N-cyclohexylhydroxylamin sowie deren Gemische. Die Inhibitoren sind in den Formmassen im allgemeinen in einer Menge von 0,005 bis 0,2, vorzugsweise 0,01_ bis 0,1 Gew.-%, bezogen auf die Komponenten A + B, enthalten.

Geeignete Härtungsbeschleuniger sind z.B. Octoate oder Naphthenate von Kupfer, Blei, Calcium, Magnesium, Cer und insbesondere von Mangan und Cobalt; ferner aromatische Amine, wie Dimethylanilin oder Diethylanilin.

Ein bevorzugtes Verfahren zur Herstellung der erfindungsgemäßen Formmassen besteht darin, daß man zunächst eine Lösung aus dem ungesättigten Polyester A in den Monomeren B herstellt, die außerdem die Füllstoffe D, die Radikalinitiatoren E, den Viskositätserniedriger F und gegebenenfalls die weiteren Zusatzstoffe G enthält, und mit diesem flüssigen Gemisch, das dank der erfindungsgemäß zugesetzten Aminosäuren eine ausreichend niedrige Viskosität aufweist, die Verstärkungsfasern C, die vorzugsweise als geschnittene Rovings von bis zu 5 cm Länge vorliegen, tränkt. Das Eindicken des Harz-Füllstoff-Gemisches geschieht dann durch polymeranaloge Umsetzungen des Eindickmittels mit den Endgruppen des ungesättigten Polyesters, wobei der Viskositätsanstieg durch Molekulargewichtsvergrößerung verursacht wird. Das Eindicken kann bei Raumtemperatur erfolgen, es dauert dann im allgemeinen einige Stunden. Durch Erhöhen der Temperatur kann es beschleunigt werden. Bevorzugt wird dann bei Temperaturen zwischen 50 und 80 °C bis 10 min lang eingedickt. Bei dem Eindickprozeß entstehen klebfreie und lagerfähige Halbzeuge von genügend hoher Viskosität, die je nach Art und Menge der Eindickmittel, Füllstoffe bzw. Verstärkungsmaterialien lederartige oder steife Konsistenz haben. Es entstehen flächige Halbzeuge, sogenannte SMC-Formmassen. Wenn man keine mattenförmige Verstärkungsmaterialien C sondern kürzere, z.B. 1 bis 5 cm lange Fasern verwendet und weitgehend auf Eindickmittel verzichtet, erhält man teigartige BMC-Formmassen. Beide Formmassen-Typen können in Stahlformen unter einem Druck von 0,4 bis $15 N.mm^{-2}$ bei Temperaturen von 80 bis 180 °C, vorzugsweise zwischen 120 und 160 °C zu Formteilen verarbeitet werden. So lassen sich z.B. auf dem Kraftfahrzeugsektor Karosserieteile, wie Motorhauben, Heckklappen und Schiebedächer oder Stoßfänger herstellen, auf dem Elektrosektor Kabelverteilungskästen, oder auf dem Möbelsektor Stühle, Heizgehäuse oder Schalen. Derartige Produkte zeichnen sich gegenüber Metallen durch leichteres Gewicht, hohe Festigkeit in Bezug auf das Gewicht, gute Korrosionsbeständigkeit und eine Flexibilität in der Gestaltung der Teile aus.

Die in den Beispielen genannten Teile und Prozente beziehen sich auf das Gewicht.

Herstellung der Polyesterharzlösungen

Harz 1: Ein ungesättigter Polyester mit Säurezahl 28 wurde hergestellt durch Umsetzung von Maleinsäureanhydrid und Propandiol-1,2 im Molverhältnis 1 : 1,1. Er wurde 65 %ig in Styrol gelöst und mit 200 ppm Hydrochinon stabilisiert.

Harz 2: Ein ungesättigter Polyester mit Säurezahl 30 wurde hergestellt durch Umsetzung von Maleinsäureanhydrid, o-Phthalsäureanhydrid, Propandiol-1,2 und Dipropylenglykol im Molverhältnis 1 : 0,18 : 1,04 : 0,23. Er wurde 67 %ig in Styrol gelöst und mit 130 ppm Hydrochinon stabilisiert.

Herstellung der Polymerlösung

Polyvinylacetat wurde bei 50 °C 35 %ig in Styrol gelöst und mit 100 ppm Hydrochinon und 800 ppm p-Benzochinon stabilisiert. Die Lösung hatte eine Viskosität von 2000 mPas (bei 23 °C).

Beispiel 1

Zur Prüfung der Wirksamkeit der erfindungsgemäßen Viskositätserniedriger wurden folgende Mischungen hergestellt und die Viskosität mit dem Brookfield-Viskosimeter (HBT 5X) ermittelt:
60 Teile Harz 1
40 Teile Polymerlösung
3 bzw. 1 Teile verschiedener Aminosäuren F
200 Teile Kreide (Millicarb®).

Dabei wurden zunächst Harz, Polymerlösung und Aminosäure homogenisiert und dazu der Füllstoff eingerührt. Nach einstündiger Lagerung bei Raumtemperatur wurde die Viskisität bei 24° C gemessen:

| Viskositätserniedriger | Teile | Viskosität mPa.s |
|---|---|---|
| - | - | 210.000 |
| Oleoylsarkosin | 3 | 82.600 |
| 3-Oleoylaminopropionsäure | 3 | 84.000 |
| Oleoylglycin | 3 | 89.600 |
| Oleoylalanin | 3 | 137.600 |
| Oleoylaminocapronsäure | 3 | 110.400 |

Beispiel 2

Zur Prüfung der erfindungsgemäßen Zusätze in Abhängigkeit von ihrer Konzentration wurden Mischungen aus dem Harz 2 (100 Teile) und Füllstoff Kreide (200 Teile) mit unterschiedlichen Mengen Oleoylsarkosin versetzt und die Viskosität der Harzpasten gemessen:

| % Oleoylsarkosin | Viskosität mPa.s |
|---|---|
| 0 | 102.400 |
| 1 | 82.400 |
| 2 | 59.200 |
| 3 | 53.600 |

Beispiel 3

Mit einem schnellaufenden Rührwerk wurde folgende Mischung hergestellt:
40,5 Teile Harz 1
27,0 Teile Polymerlösung
2,0 Teile Oleoylsarkosin
2,9 Teile Styrol
1,0 Teile tert.-Butylperbenzoat
135,0 Teile Kreide
2,7 Teile Zinkstearat
2,0 Teile Magnesiumhydroxid-Paste
(Marinco®-H-Paste).

Auf einer Prepreg-Anlage wurden geschnittene Glasfaser-Rovings (2,6 cm lang) zwischen Polyethylenfolien mit der Mischung getränkt und anschließend 6 Tage bei Raumtemperatur gelagert. Nach Entfernen der Abdeckfolien ließ sich die imprägnierte Masse in einem Stahlwerkzeug (43 x 50 cm) zu einem 2,5 mm dicken Formteil verpressen (bei 60 bar, 145° C, 3 min). Das Formteil zeigte eine glatte, glänzende Oberfläche, an der keine Lunker erkennbar waren. Der Glasfaserghehalt betrug 27 %.

Bei dem Versuch, ohne Zusatz von Oleoylsarkosin zu arbeiten, resultierte eine hochviskose Mischung, mit der keine einwandfreie Glasfasertränkung möglich war.

Beispiel 4

Mit einem schnellaufenden Rührwerk wurde folgende Mischung hergestellt:
2500 Teile Harz 2
125 Teile Styrol
0,6 Teile p-Benzochinon
200 Teile
Polyethylenpulver (als Gleitmittel)
75 Teile Oleoylaminopropionsäure
38 Teile Magnesiumoxid
38 Teile tert.-Butylperbenzoat
120 Teile Zinkstearat
1500 Teile Kreide (HYDROCARB®)
2250 Teile Kreide (OMYA® BLR 3).

Mit dieser Mischung wurden auf einer Prepreg-Anlage geschnittene Rovings (2,6 cm lang) zwischen Polyethylenfolien getränkt. Nach fünftägiger Lagerung bei Raumtemperatur wurden die Abdeckfolien entfernt und das Halbzeug in einem tellerartigen Stahlwerkzeug 3 min bei 145°C verpreßt. Das gehärtete Formteil zeigte eine gute, lunker-und rißfreie Oberfläche. Der Glasfasergehalt betrug 27 %.

Härtbare Polyesterformmassen

Zusammenfassung

Härtbare Polyesterformmassen, enthaltend ein Gemisch aus
A. einem ethylenisch ungesättigten Polyester oder einem endständigen ungesättigten Vinylester,
B. copolymerisierbaren Monomeren,
C. faserförmigen Verstärkungsmitteln
D. pulverförmigen Füllstoffen,
E. organischen Radikalinitiatoren,
F. einem Viskositätserniedriger,
G. üblichen Zusatzstoffen.

Der Viskositätserniedriger ist ein tertiäres oder sekundäres Amin, das eine langkettige Alkyl- oder Acylgruppe sowie eine Carboxylgruppe trägt.

## Patentansprüche

**1.** Härtbare ungesättigte Polyesterformmassen, enthaltend ein Gemisch aus
A. einem ethylenisch ungesättigten Polyester oder einem endständig ungesättigten Vinylesterharz,
B. ethylenisch ungesättigten, mit A copolymerisierbaren Monomeren,
C. 5 bis 200 Gew.-%, bezogen auf A + B, faserförmiger Verstärkungsmittel,
D. 50 bis 350 Gew.-%, bezogen auf A + B, pulverförmiger Füllstoffe,
E. 0,1 bis 4 Gew.-%, bezogen auf A + B, organischer Radikalinitiatoren,
F. 0,1 bis 6 Gew.-%, bezogen auf A + B, eines Viskositätserniedrigers,
sowie gegebenenfalls
G. üblichen Eindickmitteln, schrumpfmindernden oder elastifizierenden organischen Polymeren, Gleitmitteln, Inhibitoren, Pigmenten und Härtungsbeschleunigern,

dadurch gekennzeichnet, daß der Viskositätserniedriger F eine Aminosäure der allgemeinen Formel

$$R^1-\underset{\displaystyle R^2}{\underset{|}{N}}-X-COOH \qquad (I)$$

ist, wobei die Symbole folgende Bedeutung haben:
$R^1$ = Wasserstoff oder $C_1$-$C_4$-Alkylrest,
$R^2$ = langkettiger aliphatischer Alkyl- oder Acylrest mit 6 bis 30 Kohlenstoffatomen, der gesättigt oder ungesättigt, geradkettig oder verzweigt sein kann,
X = Alkylenrest mit 1 bis 6 Kohlenstoffatomen, der geradkettig oder verzweigt sein kann.

## Claims

**1.** A curable unsaturated polyester molding material containing a mixture of

A. an ethylenically unsaturated polyester or a terminally unsaturated vinyl ester resin

B. ethylenically unsaturated monomers which are copolymerizable with A,

C. from 5 to 200% by weight, based on A + B, of a fibrous reinforcing agent,

D. from 50 to 350% by weight, based on A + B, of a powdered filler,

E. from 0.1 to 4% by weight, based on A + B, of an organic free radical initiator, and

F. from 0.1 to 6% by weight, based on A + B, of a viscosity depressant,

with or without

G. conventional thickeners, shrinkage-reducing or elasticizing organic polymers, lubricants, inhibitors, pigments and curing accelerators,

wherein the viscosity depressant F is an amino acid of the formula

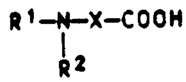

(1)

where $R^1$ is hydrogen or $C_1$-$C_4$-alkyl, $R^2$ is a long-chain aliphatic alkyl or acyl radical of 6 to 30 carbon atoms which may be saturated or unsaturated, straight-chain or branched, and X is alkylene of 1 to 6 carbon atoms which may be straight-chain or branched.

## Revendications

**1.** Masses à mouler en polyester insaturé durcissables contenant un mélange de

A. un polyester à insaturation éthylénique ou un ester vinylique à insaturation terminale,

B. des monomères à insaturation éthylénique copolymérisables avec A,

C de 5 à 200% en poids, par rapport à A + B, d'un agent de renforcement en forme de fibres,

D de 50 à 350% en poids, par rapport à A + B, d'une charge pulvérulente,

E de 0,1 à 4% en poids, par rapport à A + B, d'agents d'amorçage radicalaires organiques,

F de 0,1 à 6% en poids, par rapport à A + B, d'un réducteur de viscosité,

ainsi éventuellement que

G d'agents d'épaississement, de polymères organiques de diminution du retrait ou d'élastification, d'agents de glisse, d'inhibiteurs, de pigments et d'accélérateurs de durcissement,

caractérisées en ce que le réducteur de viscosité F est un amino-acide de formule générale

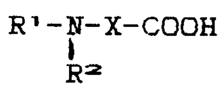

(I)

dans laquelle les symboles ont les significations suivantes:

- $R^1$ est un atome d'hydrogène ou un reste alkyle en $C_1$-$C_4$,
- $R^2$ est un reste alkyle aliphatique à longue chaîne ou acyle ayant de 6 à 30 atomes de carbone, qui peut être saturé ou insaturé, à chaîne droite ou ramifiée,
- X est un reste alkylène ayant de 1 à 6 atomes de carbone qui peut être à chaîne droite ou ramifiée.